# EUROPÄISCHE PATENTSCHRIFT

(11) **EP 1 407 904 B1**
(45) Veröffentlichungstag und Bekanntmachung des Hinweises auf die Patenterteilung: **07.03.2007**
(21) Anmeldenummer: 03019410.4
(22) Anmeldetag: 28.08.2003
(51) Int. Cl.: B60H 1/00, B60H 1/32

(54) **Klimaanlage mit Strömungshomogenisierung**
Air conditioner with flow homogenizer
Dispositif de climatisation avec homogénéisation d'un courant

(30) Priorität: 10.10.2002 DE 10247263
(43) Veröffentlichungstag der Anmeldung: 14.04.2004
(73) Patentinhaber: Behr GmbH & Co. KG, 70469 Stuttgart (DE)
(72) Erfinder: Bureau, Cathy, 70195 Stuttgart (DE); Morgenstern, Stefan, 70499 Stuttgart (DE)
(74) Vertreter: Grauel, Andreas

(56) Entgegenhaltungen:
- EP-A- 1 219 477
- DE-A- 10 156 944
- DE-A- 19 733 319
- DE-C- 19 955 616
- US-A- 6 044 656
- US-B1- 6 368 207

## Beschreibung

Die Erfindung bezieht sich auf eine Klimaanlage mit einem sich in Hauptströmungsrichtung endseitig in mehrere Teilkanäle verzweigenden Strömungskanal für einen zu konditionierenden, insbesondere zu kühlenden, Luftstrom und einem in diesem Strömungskanal angeordneten sowie in einen Kältemittelkreislauf geschalteten Wärmetauscher. Dies wird z.B. in der US 6 368 207 gezeigt.

Eine derartige Klimaanlage wird insbesondere in Kraftfahrzeugen eingesetzt. Der Wärmetauscher ist hierbei üblicherweise als Kältemittelverdampfer ausgeführt und der Kältemittelfluss wird durch einen unmittelbar durch den Fahrzeugmotor angetriebenen Kompressor erzeugt. Bei einer Fahrzeug-Klimaanlage sind besonders hohe Anforderungen an die Homogenität der konditionierten Luftströmung im Strömungskanal zu setzen, zumal hier der Luftstrom meist kurz hinter dem Verdampfer in mehrere Teilströme aufgeteilt wird, die z.B. getrennt der Fahrer- oder Beifahrerseite, sowie dem Kopf- und Fußbereich der Fahrzeugkabine zugeleitet werden. Infolge der kurzen Strömungswege zwischen dem Verdampfer und der Verzweigung des Strömungskanals werden bestehende Inhomogenitäten hinsichtlich der lokalen Lufttemperatur oder der Strömungsgeschwindigkeit mitunter nur unzureichend ausgeglichen. In unerwünschter Weise kann dies eine ungleichmäßige Konditionierung des Fahrzeuginnenraums zur Folge haben. Bei einer inhomogenen Luftströmung, wie sie z.B. durch eine asymmetrische Durchströmung des Verdampfers erzeugt wird, kann es beispielsweise vorkommen, dass der Beifahrer einen wesentlich höheren Luftstrom der kühl temperierten Luft ausgesetzt ist als der Fahrer. Ebenso ist es möglich, dass infolge einer asymmetrischen Kühlleistung des Verdampfers Fahrer und Beifahrer einem unterschiedlich temperierten Luftstrom ausgesetzt sind. Zwar können Inhomogenitäten der Luftströmung durch eine symmetrische Konstruktion der Klimaanlage und insbesondere des Verdampfers im begrenzten Umfang vermindert werden. Jedoch ist ein symmetrischer Verdampfer im Allgemeinen nur mit vergleichsweise hohem technischen Aufwand zu realisieren. Eine symmetrische Ausbildung der Klimaanlage widerspricht zudem meistens dem in einem Fahrzeug eng begrenzten Platzangebot.

Das Problem inhomogener Luftströmung tritt verstärkt bei einer Klimaanlage auf, die zum Einsatz in einem besonders verbrauchsarmen Kraftfahrzeug vorgesehen ist. Zur Reduzierung des Kraftstoffverbrauchs ist bei einem solchen Fahrzeug ein so genannter Idle-stop-Betrieb üblich. Darunter wird ein Betrieb des Fahrzeugs verstanden, bei dem der Motor bei vorübergehendem Stillstand des Kraftfahrzeugs, beispielsweise beim Halten an einer Ampel, vorübergehend abgeschaltet wird. Eine für ein solches Kraftfahrzeug geeignete Klimaanlage muss in der Lage sein, den Fahrzeuginnenraum auch dann zu klimatisieren, wenn der Motor vorübergehend abgeschaltet ist. Dies ist bei einer herkömmlichen Fahrzeug-Klimaanlage nicht ohne weiteres der Fall, zumal beim Abschalten des Motors der Kältemittelfluss unmittelbar zum Erliegen kommt.

Bei einer aus der DE 101 56 944 A1 bekannten Klimaanlage für ein verbrauchsreduziertes Kraftfahrzeug ist ein zweigeteilter Verdampfer vorgesehen, von dem ein Teil ein Kältespeichermedium (Latentkältespeicher) enthält. Dieses Verdampfersegment, auch als Speicherverdampfer bezeichnet, dient einerseits wie ein herkömmlicher Kältemittelverdampfer zur direkten Kühlung der durchströmenden Luft durch das verdampfende Kältemittel. Andererseits wird mit der bei laufendem Motor ausreichenden Kälteleistung das Kältespeichermedium eingefroren und somit "Kälte" gespeichert, die im Idle-stop-Zustand, also bei vorübergehend ausgeschalteten Motor, zur Kühlung des Luftstroms herangezogen wird. Zur Optimierung der Betriebseigenschaften dieser Klimaanlage wird der Luftstrom bei laufendem Motor durch das andere, nicht speichernde Verdampfersegment geleitet, während der Luftstrom im Idle-stop-Zustand durch den Speicherverdampfer geleitet wird.

Die derart zweiteilige Ausführung des Verdampfers kompliziert eine symmetrische Konstruktion der Klimaanlage zusätzlich, insbesondere zumal betriebsbedingt meistens ein Segment des Verdampfers abgesperrt ist. Mit Inhomogenitäten der konditionierten Luftströmung und den damit verbundenen unerwünschten Nebeneffekten ist hier in verstärktem Umfang zu rechnen.

Der Erfindung liegt die Aufgabe zugrunde, eine Klimaanlage, insbesondere für ein Kraftfahrzeug, anzugeben, bei der mit einfachen Mitteln eine homogene Luftströmung der konditionierten Luft erreicht wird.

Diese Aufgabe wird erfindungsgemäß gelöst durch die Merkmale des Patentanspruchs 1. Danach ist bei einer Klimaanlage mit einem sich in Hauptströmungsrichtung endseitig in mehrere Teilkanäle verzweigenden Strömungskanal für einen zu konditionierenden Luftstrom und einem im Strömungskanal angeordneten sowie in einen Kältemittelkreislauf geschalteten Wärmetauscher stromab des Wärmetauschers und mit Abstand stromauf der Teilkanäle mindestens ein Strömungsumlenkelement vorgesehen.

Das Strömungsumlenkelement oder mehrere Strömungsumlenkelemente sorgen dabei für eine Verwirbelung der aus dem Wärmetauscher abströmenden konditionierten Luft und damit für einen effektiven Ausgleich der innerhalb des Luftstroms herrschenden Inhomogenitäten hinsichtlich der Lufttemperatur sowie des örtlichen Strömungsdurchsatzes, bevor eine Aufteilung des Luftstroms in mehrere getrennte Teilströme stattfindet.

Vorzugsweise ist ein Strömungsumlenkelement vorgesehen, das sich, z.B. spiralenartig, über den Querschnitt des Strömungskanals erstreckt. Alternativ können auch mehrere, einzeln oder in Gruppen über den Querschnitt des Strömungskanals verteilte Strömungsumlenkelemente vorgesehen sein. Ohne Beschränkung der Allgemeinheit wird nachfolgend von mehreren vorhandenen Strömungsumlenkelementen ausgegangen.

In einer bevorzugten Ausführung sind die Strömungsumlenkelemente als flache Leitstücke ausgebildet, deren stromabwärtiges Ende jeweils bezüglich des Strömungskanals nach innen, und somit etwa zu dessen Mitte hin, umgebogen ist. Die in verschiedenen Querschnittsbereichen des Strömungskanals auf die Strömungsumlenkelemente stoßenden Teilströme des Luftstroms werden somit aus der Hauptströmungsrichtung ins Innere des Strömungskanals gelenkt, um eine Asymmetrie des Strömungsprofils auszugleichen und eine besonders effektive Durchmischung des Luftstroms anzuregen.

In einer Platz sparenden und konstruktiv einfachen Ausführung sind die Strömungsumlenkelemente direkt an der stromabwärtigen Seite des Wärmetauschers angebracht. Im Hinblick auf eine einfache Montage sind die Strömungsumlenkelemente dabei bevorzugt durch eine Steck- oder Klemmverbindung am Verdampfernetz fixiert.

In vorgesehenen Varianten der Erfindung sind die Strömungsumlenkelemente entweder aus einem starren Material, z.B. Blech oder einem harten Kunststoff, oder alternativ aus einem flexiblen Material, z.B. einem Elastomer, ausgebildet. Mittels flexibler Strömungsumlenkelemente werden vorteilhafterweise eventuelle Strömungspulsationen der Luftströmung gedämpft. Außerdem geben flexible Strömungsumlenkelemente bei einem erhöhten Strömungsdurchsatz etwas nach, so dass in begrenztem Rahmen eine selbsttätige durchsatzabhängige Anpassung des Strömungswiderstands erfolgt. Optional ist auch eine Mischbestückung mit starren und flexiblen Strömungsumlenkelementen vorgesehen.

Je nach Größe und Geometrie der Klimaanlage ist es weiterhin besonders vorteilhaft, die Strömungsumlenkelemente entweder glattflächig auszubilden oder die Strömungsumlenkelemente, z.B. durch Aufrauhung oder auf Wellung ihrer Oberfläche, als Turbulenz-Leitstücke auszubilden. Der Vorteil glattflächiger Strömungsumlenkelemente besteht insbesondere darin, dass sie dem Luftstrom einem vergleichsweise geringen Strömungswiderstand entgegensetzen. Ein Turbulenz-Leitstück fördert andererseits die Durchmischung des Luftstroms durch gezielte Erzeugung einer turbulenten Strömung.

Der Einsatz von Strömungsumlenkelementen ist besonders vorteilhaft in einer Klimaanlage, deren Wärmetauscher mindestens zwei Segmente aufweist, von denen mindestens ein Segment als Speicherverdampfer ausgebildet ist und zu diesem Zweck insbesondere ein Kältespeichermedium enthält. Im Hinblick auf die bevorzugte Ausführung eines solchen Wärmetauschers wird explizit Bezug genommen auf die DE 101 56 944 A1. Dabei ist zweckmäßigerweise eine Absperrvorrichtung vorgesehen, mittels derer mindestens ein Verdampfersegment für den Luftstrom absperrbar ist.

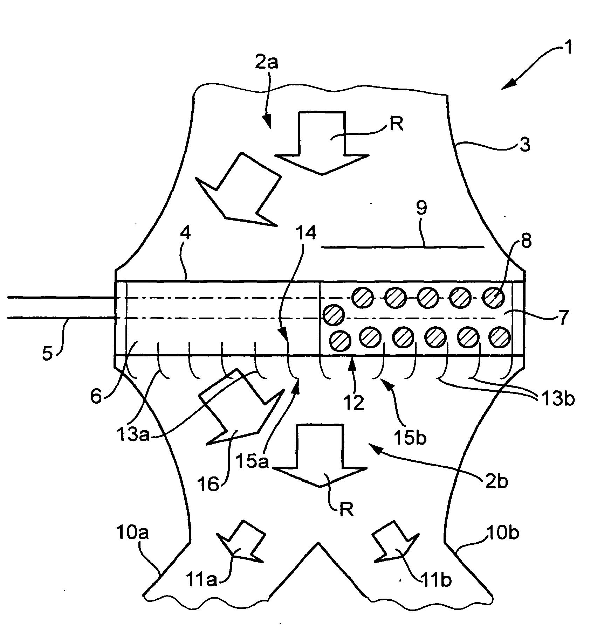

Nachfolgend wird ein Ausführungsbeispiel der Erfindung anhand einer Zeichnung näher erläutert. Dabei zeigt die einzige Figur eine für ein Fahrzeug vorgesehene Klimaanlage mit einem als Kältemittelverdampfer ausgeführten Wärmetauscher, an dessen stromabwärtigen Seite Strömungsumlenkelemente angeordnet sind.

Die schematisch dargestellte Klimaanlage 1 umfasst einen von einem Luftstrom 2 durchströmten Strömungskanal 3, dessen Längserstreckung eine in der Figur durch Strömungspfeile markierte Hauptströmungsrichtung R vorgibt. Im Strömungskanal 3 ist dabei ein dessen Querschnitt ausfüllender Kältemittelverdampfer, nachfolgend als Verdampfer 4 bezeichnet, angeordnet. Stromaufwärts des Verdampfers 4 ist der Luftstrom 2 als 2a bezeichnet, stromabwärts als 2b. Zur Kühlung des Luftstroms 2 ist der Verdampfer 4 an einen nur schematisch angedeuteten Kältemittelkreislauf 5 angeschlossen, in dem ein nicht näher dargestellter, vom Fahrzeugmotor angetriebener Kompressor einen Kältemittelfluss erzeugt.

Der Verdampfer 4 weist zwei bezüglich des Luftstroms 2 parallel geschaltete Segmente 6 und 7 auf. Das erste Segment 6 ist nach Art eines gewöhnlichen in Fahrzeug-Klimaanlagen eingesetzten Kältemittelverdampfers (vgl. z.B. Kraftfahrtechnisches Taschenbuch / Bosch (Chefred.: H. Bauer), 23. Aufl., Braunschweig (Vieweg), 1999, S. 777ff) ausgebildet, bei dem dem durchströmenden Luftstrom 2 durch Verdampfung des Kältemittels Wärme entzogen wird. Das zweite Segment 7 ist zusätzlich zumindest teilweise mit einem, bei Raumtemperatur flüssigen Kältespeichermedium 8, z.B. Wasser oder Decanol, gefüllt. Das Kältespeichermedium 8 wird bestimmungsgemäß durch Wärmetransfer an das Kältemittel eingefroren. Das eingefrorene Kältespeichermedium 8 dient dabei als Kältespeicher, der den Luftstrom 2 auch dann noch für eine begrenzte Zeit weiter kühlt, wenn der Kältemittelfluss im Kältemittelkreislauf 5 zum Erliegen gekommen ist. Durch eine schematisch gezeigte Sperrklappe 9 ist das erste Segment 6 oder zweite Segment 7 selektiv für den Luftstrom 2 absperrbar. In der Darstellung ist beispielhaft das Segment 7 vollständig abgesperrt, während das Segment 6 vollständig für den Luftstrom 2 geöffnet ist.

Die Klimaanlage 1 ist für ein Fahrzeug mit reduziertem Kraftstoffverbrauch vorgesehen, bei welchem ein so genannter Idle-stop-Betrieb möglich ist. Dabei wird zur Reduzierung des Kraftstoffverbrauchs der Motor vorübergehend ausgeschaltet, wenn das Fahrzeug, z.B. an einer roten Ampel, vorübergehend stillsteht.

Im Normalbetrieb, d.h. bei laufendem Motor, wird der Luftstrom 2 wie dargestellt durch das Segment 6 geleitet, während das Segment 7 gegen den Luftstrom 2 abgesperrt ist, um die Abführung der dort gespeicherten Kälte durch die warme Außenluft zu unterdrücken. Der Luftstrom 2 durchläuft den Verdampfer 4 somit in asymmetrischer Weise nur im Bereich des Segments 6. Im Idle-stop-Zustand, also bei vorübergehend ausgeschaltetem Motor, kommt der Kältemittelfluss im Kältemittelkreislauf 5 zum Erliegen. Um in diesem Fall den Luftstrom 2 weiterhin zu kühlen, wird die Sperrklappe 9 in nicht näher dargestellter Weise derart geschaltet, dass das Segment 6 abgesperrt ist, während das Segment 7 des Verdampfers 4 für den Luftstrom 2 geöffnet ist. Die Kühlung des Luftstroms 2 erfolgt hierbei durch einen Wärmeübertrag von der warmen Außenluft auf das auftauende Kältespeichermedium 8. Der Luftstrom 2 durchläuft somit den Verdampfer 4 wiederum in asymmetrischer Weise, indem er den Verdampfer 4 nur im Bereich des Segments 7 durchströmt.

Für besonders große Kühlleistung ist ein dritter, nicht näher dargestellter Betriebszustand vorgesehen, in welchem die Sperrklappe 9 derart geschaltet ist, dass sowohl das Segment 6 als auch das Segment 7 vom Luftstrom 2 durchströmt werden. In diesem Fall ist der Luftstrom 2 bezüglich des Strömungskanals 3 annähernd symmetrisch. Jedoch weisen die beiden Segmente 6 und 7 aufgrund ihrer unterschiedlichen Bauweise einen unterschiedlichen Strömungswiderstand sowie eine unterschiedliche Kühlleistung auf, so dass der aus dem Verdampfer 4 abströmende Luftstrom 2b auch dann hinsichtlich seines Strömungsprofils und seiner querschnittsmäßigen Temperaturverteilung Inhomogenitäten aufweist, wenn beide Segmente 6 und 7 durchströmt werden.

Im dargestellten Beispiel ist der Strömungskanal 3 stromab des Verdampfers 4 in zwei Teilkanäle 10a und 10b aufgeteilt, die beispielsweise mit einem fahrerseitigen Teil bzw. einem beifahrerseitigen Teil einer nicht näher dargestellten Fahrzeugkabine verbunden sind. Entsprechend wird der vom Verdampfer 4 abströmende, konditionierte Luftstrom 2b in zwei Teilströme 11 a und 11 b aufgeteilt. Der Teilstrom 11a wird durch den Teilkanal 10a dem Fahrer zugeleitet, während der Teilstrom 11 b über den Teilkanal 10b dem Beifahrer zugeleitet wird.

Um eine für das Wohlbefinden aller Fahrzeuginsassen wichtige gleichmäßige und gleich temperierte Beströmung beider Teilkanäle 10a und 10b zu erreichen, ist unabhängig vom Betriebszustand der Klimaanlage 1 eine hohe Homogenität des Luftstroms 2b erforderlich. Zur Herstellung dieser Homogenität sind an der stromabwärtigen Seite 12 des Verdampfers 4 mehrere Strömungsumlenkelemente 13 angebracht. Die Strömungsumlenkelemente 13 sind in zwei Gruppen 13a und 13b aufgeteilt. Die Strömungsumlenkelemente 13a sind dabei im Bereich des Segments 6 und die Strömungsumlenkelemente 13b im Bereich des Segments 7 angeordnet. Die Strömungsumlenkelemente 13 sind in der Art flacher Leitbleche ausgeführt und in nicht näher dargestellter Weise direkt in das Verdampfernetz des Verdampfers 4 eingesteckt. Das stromaufwärts gerichtete Ende 14 jedes Strömungsumlenkelements 13 ist dabei etwa parallel zur Hauptströmungsrichtung R ausgerichtet. Das stromabwärtige Ende 15 jedes Strömungsumlenkelements 13 ist aus der Hauptrichtung R herausgebogen, so dass der an jedem Strömungsumlenkelement 13 vorbeistreichende Teil des Luftstroms 2 abgelenkt wird. Im Bereich der Strömungsumlenkelemente 13a erfolgt diese Ablenkung beispielsweise etwa in Richtung des Strömungspfeils 16. Die Strömungsumlenkelemente 13a einerseits und die Strömungsumlenkelemente 13b andererseits sind gegensinnig gebogen, so dass die stromabwärtigen Enden 15a der Strömungsumlenkelemente 13a den stromabwärtigen Enden 15b der Strömungsumlenkelemente 13b entgegengerichtet sind. Innerhalb jeder Gruppe sind die zugehörigen Strömungsumlenkelemente 13a bzw. 13b zueinander gleichsinnig gebogen. Insbesondere sind dabei die stromabwärtigen Enden 15 der meisten Strömungsumlenkelemente 13 etwa zur Mitte des Strömungskanals 3 hin ausgerichtet, so dass sowohl ein durch das Segment 6 strömender Teil des Luftstroms 2 als auch ein durch das Segment 7 strömender Teil des Luftstroms 2 nach Passieren des Verdampfers 4 jeweils zur Mitte des Strömungskanals 3 hin abgelenkt wird. Die Strömungsumlenkung bewirkt einen effektiven Ausgleich der je nach Betriebszustand der Klimaanlage 1 unterschiedlich ausgeprägten Asymmetrie des Strömungsprofils des Luftstroms 2b. Insbesondere kommt es infolge der bei der Strömungsumlenkung erzeugten Turbulenzen zu einer Durchmischung des Luftstroms 2b, wodurch örtliche Temperaturunterschiede ausgeglichen werden. Für die Teilströme 11a und 11 b herrschen dadurch hinsichtlich Strömungsdichte und Temperatur etwa gleiche Bedingungen.

### Bezugszeichenliste

- 1: Klimaanlage
- 2: Luftstrom
- 3: Strömungskanal
- 4: Verdampfer
- 5: Kältemittelkreislauf
- 6,7: Segmente
- 8: Kältespeichermedium
- 9: Sperrklappe
- 10: Teilkanal
- 11: Teilstrom
- 12: Seite
- 13: Strömungsumlenkelement
- 14: Ende
- 15: Ende
- 16: Strömungspfeil
- R: Hauptströmungsrichtung

## Patentansprüche

1. Klimaanlage (1) mit einem sich in Hauptströmungsrichtung (R) endseitig in mehrere Teilkanäle (10a, 10b) verzweigenden Strömungskanal (3) für einen zu konditionierenden Luftstrom (2) und einem in diesem Strömungskanal (3) angeordneten sowie in einen Kältemittelkreislauf (5) geschalteten Wärmetauscher (4) und einem oder mehreren stromab des Wärmetauschers (4) und mit Abstand stromauf der Teilkanäle (10a, 10b) angeordneten Strömungsumlenkelementen (13) zur Homogenisierung des Luftstroms (2b)
**dadurch gekennzeichnet,**
**dass** die stromabwärtigen Enden (15) der Strömungsumlenkelemente (13) oder die jeweiligigen stromabwärtigen Enden (15) zumindest eines Teils der Strömungsumlenkelemente (13) etwa tangential oder etwa radial zur Mitte des Strömungskanals (3) hingebogen sind.

2. Klimaanlage nach Anspruch 1,
**dadurch gekennzeichnet,**
**dass** das oder jedes Strömungsumlenkelement (13) an der stromabwärtigen Seite (12) des Wärmetauschers (4) angebracht ist.

3. Klimaanlage nach Anspruch 2,
**dadurch gekennzeichnet,**
**dass** das oder jedes Strömungsumlenkelement (13) am Wärmetauscher (4) durch eine Steck- oder Klemmverbindung fixiert ist.

4. Klimaanlage nach einem der Ansprüche 1 bis 3,
**dadurch gekennzeichnet,**
**dass** das oder jedes Strömungsumlenkelement (13) starr ausgebildet ist.

5. Klimaanlage nach einem der Ansprüche 1 bis 4,
**dadurch gekennzeichnet,**
**dass** das oder jedes Strömungsumlenkelement (13) biegeflexibel ausgebildet ist.

6. Klimaanlage nach einem der Ansprüche 1 bis 5,
**dadurch gekennzeichnet,**
**dass** das oder jedes Strömungsumlenkelement (13) glattflächig ausgebildet ist.

7. Klimaanlage nach einem der Ansprüche 1 bis 6,
**dadurch gekennzeichnet,**
**dass** das oder jedes Strömungsumlenkelement (13) als Turbulenz-Leitstück ausgebildet.

8. Klimaanlage nach einem der Ansprüche 1 bis 7,
**dadurch gekennzeichnet,**
**dass** der Wärmetauscher (4) mindestens zwei Segmente (6,7) aufweist, von denen mindestens ein Segment (7) als Speicherverdampfer ausgebildet ist.

9. Klimaanlage nach einem der Ansprüche 1 bis 8,
**dadurch gekennzeichnet,**
**dass** der Wärmetauscher (4) mindestens zwei Segmente (6,7) aufweist, von denen mindestens ein Segment (6,7) durch eine Absperreinrichtung (9) für den Luftstrom (2) absperrbar ist.

## Claims

1. An air conditioning system (1) having a flow duct (3) for an air flow (2) to be conditioned which branches at the end in the main direction of flow (R) into several part ducts (10a, 10b), a heat exchanger (4) which is positioned in this flow duct and connected to a refrigerant circuit (5) and one or more flow diversion elements (13) for homogenising the air flow (2b) which are positioned downstream of the heat exchanger (4) and a certain distance upstream of the part ducts (10a, 10b),
**characterised in that**
either the downstream ends (15) of the flow diversion elements (13) or the downstream ends (15) of at least some of the flow diversion elements (13) are curved approximately tangentially or approximately radially towards the centre of the flow duct (3).

2. An air conditioning system in accordance with claim 1,
**characterised in that**
the or each flow diversion element (13) is mounted on the downstream side (12) of the heat exchanger (4).

3. An air conditioning system in accordance with claim 2,
**characterised in that**
the or each flow diversion element (13) is fixed to the heat exchanger (4) by a plug-in or clamped connection.

4. An air conditioning system in accordance with one of claims 1 to 3,
**characterised in that**
the or each flow diversion element (13) is rigid in design.

5. An air conditioning system in accordance with one of claims 1 to 4,
**characterised in that**
the or each flow diversion element (13) is flexural in design.

6. An air conditioning system in accordance with one of claims 1 to 5,
**characterised in that**
the or each flow diversion element (13) is smooth-surfaced in design.

7. An air conditioning system in accordance with one of claims 1 to 6,
**characterised in that**
the or each flow diversion element (13) is designed as a turbulence conductor.

8. An air conditioning system in accordance with one of claims 1 to 7,
**characterised in that**
the heat exchanger (4) has at least two segments (6, 7), one segment (7) of which at least is designed as a storage evaporator.

9. An air conditioning system in accordance with one of claims 1 to,
**characterised in that**
the heat exchanger (4) has at least two segments (6, 7), one segment (6, 7) of which at least can be shut-off by a shut-off device (9) for the air flow (2).

## Revendications

1. Installation de climatisation (1) comportant un canal d'écoulement (3) pour un flux d'air (2) à climatiser, lequel, du côté de l'extrémité, se ramifie dans la direction d'écoulement principale (R) en plusieurs canaux partiels (10a, 10b), et un échangeur thermique (4) monté dans ce canal d'écoulement (3), ainsi que dans un circuit de fluide réfrigérant (5), et un ou plusieurs éléments de déviation du flux (13) pour l'homogénéisation du flux d'air (2b), lesquels sont montés en aval de l'échangeur thermique (4) et à distance en amont des canaux partiels (10a, 10b), **caractérisée en ce que** les extrémités aval (15) des éléments de déviation du flux (13) ou les extrémités aval (15) respectives d'au moins une partie des éléments de déviation du flux (13) sont courbées sensiblement tangentiellement ou sensiblement radialement par rapport au milieu du canal d'écoulement (3).

2. Installation de climatisation (1) selon la revendication 1, **caractérisée en ce que** le ou chaque élément de déviation du flux (13) est monté sur le côté aval (12) de l'échangeur thermique (4).

3. Installation de climatisation (1) selon la revendication 2, **caractérisée en ce que** le ou chaque élément de déviation du flux (13) est fixé sur l'échangeur thermique (4) au moyen d'un assemblage par enfichage ou serrage.

4. Installation de climatisation (1) selon l'une quelconque des revendications 1 à 3, **caractérisée en ce que** le ou chaque élément de déviation du flux (13) est réalisé sous forme rigide.

5. Installation de climatisation (1) selon l'une quelconque des revendications 1 à 4, **caractérisée en ce que** le ou chaque élément de déviation du flux (13) est réalisé sous forme flexible.

6. Installation de climatisation (1) selon l'une quelconque des revendications 1 à 5, **caractérisée en ce que** le ou chaque élément de déviation du flux (13) est réalisé avec une surface lisse.

7. Installation de climatisation (1) selon l'une quelconque des revendications 1 à 6, **caractérisée en ce que** le ou chaque élément de déviation du flux (13) est réalisé sous forme de déflecteur générant des turbulences.

8. Installation de climatisation (1) selon l'une quelconque des revendications 1 à 4, **caractérisée en ce que** l'échangeur thermique (4) comporte au moins deux segments (6, 7), parmi lesquels au moins un segment (7) est réalisé sous forme d'évaporateur d'accumulation.

9. Installation de climatisation (1) selon l'une quelconque des revendications 1 à 8, **caractérisée en ce que** l'échangeur thermique (4) comporte au moins deux segments (6, 7), parmi lesquels au moins un segment (6, 7) peut être fermé au flux d'air (2) par un dispositif de fermeture (9).
